# EUROPÄISCHE PATENTSCHRIFT

(11) **EP 3 347 612 B1**
(45) Veröffentlichungstag und Bekanntmachung des Hinweises auf die Patenterteilung: **17.03.2021**
(21) Anmeldenummer: 16774616.3
(22) Anmeldetag: 09.09.2016
(51) Int. Cl.: F16D 23/06

(54) **DRUCKSTÜCK EINES FAHRZEUGGETRIEBES UND SYNCHRONISIEREINHEIT**
PRESSURE PIECE OF A VEHICLE TRANSMISSION AND SYNCHRONIZATION UNIT
ÉLÉMENT DE PRESSION D'UNE BOÎTE DE VITESSES DE VÉHICULE ET UNITÉ DE SYNCRHONISATION

(30) Priorität: 10.09.2015 DE 102015217294
(43) Veröffentlichungstag der Anmeldung: 18.07.2018
(73) Patentinhaber: Schaeffler Technologies AG & Co. KG, 91074 Herzogenaurach (DE)
(72) Erfinder: HEILMANN, Bernd, 33829 Borgholzhausen (DE); POTTKÄMPER, Dennis, 32139 Spenge (DE)
(86) Internationale Anmeldenummer: PCT/DE2016/200426
(87) Internationale Veröffentlichungsnummer: WO 2017/041803

(56) Entgegenhaltungen:
- EP-A2- 1 715 210
- EP-A2- 2 003 356
- WO-A1-2009/115269
- DE-A1- 10 225 269
- DE-U1- 20 022 345

## Beschreibung

Die Erfindung betrifft ein Druckstück für eine Synchronisiereinheit eines Fahrzeuggetriebes mit einem Bodenteil, einem Deckelteil, der axial endseitig einen Druckabschnitt aufweist, um einen Synchronring zu verschieben, und einer Feder, die zwischen dem Bodenteil und dem Deckelteil angeordnet ist. Die Erfindung betrifft weiterhin eine Synchronisiereinheit mit einem Druckstück.

Synchronisiereinheiten werden eingesetzt, um in Gangwechselgetrieben ein Losrad mit einer Welle drehfest zu setzen. Derartige Synchronisiereinheiten weisen üblicherweise einen mit der Welle drehfest verbundenen Muffenträger auf, auf dem eine Schiebemuffe aufgesetzt und mit dem Muffenträger drehfest, jedoch axial verschiebbar gekoppelt ist. Ferner sind ein Synchronring oder ein Synchronringpaket und das Losrad vorgesehen, wobei der Synchronring bzw. das Synchronringpaket zwischen dem Losrad und dem Muffenträger angeordnet ist. Bei einer synchronisierten Ankopplung des Losrads an den Körper wird die Schiebemuffe in Richtung des Losrads verschoben, wobei das Synchronringpaket für eine Drehzahlangleichung sorgt. Sobald die Drehzahlen von Losrad und der Welle aneinander angeglichen sind, kann die Schiebemuffe auf das Losrad geschoben werden, um dieses drehfest mit dem Muffenträger und damit mit der Welle zu setzen. In den Synchronisiereinheiten sind üblicherweise Druckstücke angeordnet, welche von dem Muffenträger getragen werden und welche von der Schiebemuffe in axialer Richtung mitgeführt werden, um Druck auf das Synchronringpaket auszuüben.

DE 10 2006 018 284 A1 offenbart eine Synchronisiereinheit mit einem Druckstück, das Flügel aufweist, welche sich in Umfangsrichtung erstrecken und welche auf einer Umfangsfläche des Muffenträgers der Synchronisiereinheit aufliegen. Das Druckstück weist eine Kugel auf, welche in eine Ausnehmung in einer Schiebemuffe verrastbar ist.

DE 10 2011 075 504 A1 zeigt ein weiteres Druckstück mit Flügeln, die in Umfangsrichtung gerichtet sind.

Ein gattungsgemäßes Druckstück geht aus WO 2009/115269 A1 hervor. Weitere Druckstücke sind in EP 1 715 210 A2, DE 200 22 345 U1, DE 102 25 269 und EP 2 003 356 A2 gezeigt.

### Aufgabe der Erfindung

Es ist Aufgabe der vorliegenden Erfindung, ein leichtes, flaches und kompakt bauendes Druckstück für eine Synchronisiereinheit sowie eine Synchronisiereinheit anzugeben, das einen einfachen Aufbau der Synchronisiereinheit, die Übermittlung hoher Drehmomente der Synchronisiereinheit ermöglicht und die Schaltkräfte sicher auf den Synchronring überträgt.

Diese Aufgabe wird durch eine Druckstück mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Die Länge des Deckelteils ist größer als die Breite des Bodenteils. Dabei wird die Länge im montierten Zustand in Richtung der Getriebehauptachse, also der Verschieberichtung des Druckstücks gesehen und die Breite des Bodenteils in Umfangsrichtung verstanden. Dadurch dass die Länge des Deckelteils größer ist als die Breite des Druckstücks, kann das Druckstück sich ggf. auch während des Verschiebens an einem der es flankierenden Bauteile abstützen. Die Gefahr des Verkippens ist damit verringert. Zusätzlich kann vorgesehen sein, dass sich das Druckstück auch über den Bodenteil abstützt. Ein derartig ausgebildetes Druckstück kann sich damit über bis zu vier Flächen seitlich der Rastierung abstützen. Damit kann es auch für den Fall, dass es radial sehr flach baut, sicher abgestützt werden. Die radial flache Bauweise wiederum erlaubt die Übertragung hoher Drehmomente, da kleinere Ausnehmungen in dem Muffenträger diesen weniger schwächen.

Ein weiterer Vorteil der Erfindung ist es, dass durch den langen Deckel es einfacher möglich ist, den Synchronring zu beaufschlagen. Dadurch dass der Deckel axial relativ weit auskragt, können die Lappen am Synchronring, die in Axialrichtung weisen, verkürzt werden oder sogar entfallen. Das vereinfacht die Herstellung des Synchronrings.

Die Synchronisiereinheit ist als Teil eines Getriebes, insbesondere eines Gangwechsel- oder Zahnräderwechselgetriebes ausgebildet. Das Getriebe kann als ein manuelles Getriebe oder als ein automatisches Getriebe realisiert sein. Die Funktion der Synchronisiereinheit ist es, eine Welle mit dem Losrad zunächst zu synchronisieren und dann drehfest zu setzen.

Die Synchronisiereinheit weist einen Muffenträger auf, welcher zum Aufsetzen auf eine Welle ausgebildet ist. Der Muffenträger und/oder die Welle definieren eine Hauptachse. Der Muffenträger ist ausgebildet, drehfest und vorzugsweise verschiebefest auf der Welle zu sitzen. Beispielsweise weist der Muffenträger eine zentrale Durchgangsöffnung zur Aufnahme der Welle auf, wobei der Muffenträger in der Durchgangsöffnung eine Axialverzahnung oder eine Steckverzahnung für die drehfeste Kopplung mit der Welle hat. Vorzugsweise ist der Muffenträger aus Metall gefertigt. Der Muffenträger weist eine Axialaußenverzahnung auf. Insbesondere befindet sich auf der radial äußeren Umfangfläche des Muffenträgers eine Mehrzahl von Außenzähnen, deren Längserstreckung in axialer Richtung und/oder parallel zu der Hauptachse verläuft und die die Axialaußenverzahnung bilden. Zudem weist der Muffenträger eine Aussparung auf, die randseitig, insbesondere an dem radial äußeren Umfang des Muffenträgers angeordnet ist und nach radial außen geöffnet sind.

Die Synchronisiereinheit umfasst eine Schiebemuffe, wobei die Schiebemuffe für eine lösbare, drehfeste Kopplung mit einem Losrad, insbesondere Gangrad ausgebildet ist. Das Losrad sitzt koaxial zu der Welle und ist insbesondere auf der Welle angeordnet. Die Schiebemuffe weist eine Axialinnenverzahnung auf, insbesondere zeigt die Schiebemuffe an ihrer radialen inneren Umfangsfläche eine Mehrzahl von Innenzähnen, welche in axialer Richtung und/oder parallel zu der Hauptachse ausgerichtet sind. Die Axialinnenverzahnung greift in die Axialaußenverzahnung ein, sodass der Muffenträger und die Schiebemuffe zueinander drehfest gesetzt sind. Allerdings ist die Schiebemuffe in axialer Richtung in Bezug auf die Hauptachse relativ zu dem Muffenträger verschiebbar auf dem Muffenträger angeordnet.
Die Synchronisiereinheit weist mindestens ein Druckstück auf. Vorzugsweise weist die Synchronisiereinheit mehrere Druckstücke auf, welche insbesondere regelmäßig in Umlaufrichtung um die Hauptachse verteilt angeordnet sind. Das Druckstück ist zumindest abschnittsweise in der Aussparung angeordnet. Das Druckstück weist einen Bodenteil, einen Deckelteil sowie eine Feder auf, welche zwischen dem Bodenteil und dem Deckelteil angeordnet ist. Die Feder dient dazu, den Bodenteil und den Deckelteil auseinanderzudrücken und damit den Deckelteil gegen eines der Bauteile Schiebemuffe oder Muffenträger zu verrasten. Die Federrichtung der Feder ist vorzugsweise radial zu der Hauptachse ausgerichtet. Das Druckstück hat vorzugsweise die Funktion, den Schiebemuffe relativ zu dem Muffenträger temporär zu arretieren und/oder festzulegen. Der Bodenteil kann aus Kunststoff oder Metall ausgebildet sein, der Deckelteil ebenfalls, wobei er vorzugsweise aus Metall ausgebildet ist. Sind Teile des Druckstücks aus Metall, sind diese vorzugsweise blechumformtechnisch hergestellt, beispielsweise tiefgezogen.

In Umlaufrichtung um die Hauptachse betrachtet weist der Muffenträger, insbesondere auf jeder Seite der Aussparung randseitig Auflagebereiche auf. Die Auflagebereiche erstrecken sich insbesondere in axialer Richtung zu der Hauptachse. Die Auflagebereiche sind vorzugsweise geradlinig ausgebildet, können jedoch auch gekrümmt realisiert sein.

Der Bodenteil des Druckstücks weist beidseitig in Umlaufrichtung weisende randseitige Stützabschnitte auf. Vorzugsweise sind die Stützabschnitte als Flügel oder Stege ausgebildet. Der Bodenteil liegt mit den Stützabschnitten auf den Auflagebereichen auf, insbesondere derart, dass das Bodenteil in radialer Richtung, und zwar in Richtung zu der Hauptachse abgestützt ist.

Die Stützabschnitte sind vorzugsweise zumindest in dem Bereich der Innenzähne innerhalb eines Teilkreises angeordnet, insbesondere vollständig angeordnet, welcher kleiner als der Kopfkreis der Axialinnenverzahnung des Schiebemuffes ausgebildet ist. Definiert somit die Axialinnenverzahnung mit den Spitzen der Innenzähne einen Kopfkreis, so ragen die Stützabschnitte zumindest in dem Bereich der Innenzähne nicht in den Kopfkreis hinein. Insbesondere verbleibt stets ein Spalt in radialer Richtung zwischen den Stützabschnitten und den Innenzähnen der Axialinnenverzahnung.

Durch das Zurückversetzen der Stützabschnitte in den Kopfkreis der Axialinnenverzahnung kann erreicht werden, dass der Kopfkreis der Axialinnenverzahnung als Bauraum für die Stützabschnitte nicht benötigt wird. Vorzugsweise sind die Stützabschnitte vollständig innerhalb des Kopfkreises der Axialinnenverzahnung angeordnet. Diese Ausgestaltung erlaubt es, dass die Innenzähne der Axialinnenverzahnung im Bereich der Stützabschnitte des Druckstücks nicht ausgespart werden müssen, sondern durchgängig in axialer Richtung verlaufen können. Dies wiederum führt zu einer höheren Belastbarkeit der Schiebemuffe und damit der vollständigen Synchronisiereinheit bei der Übertragung von Kräften zwischen dem Muffenträger und dem Losrad.

Bei einer bevorzugten Ausgestaltung der Erfindung ist mindestens ein Innenzahn der Axialinnenverzahnung der Schiebemuffe überlappend zu einem Winkelsegment angeordnet, der durch die Abmessung eines der Stützabschnitte in Umlaufrichtung definiert ist. Insbesondere befindet sich der eine Zahn zumindest abschnittsweise an der gleichen Winkelposition wie der dazu benachbarte Stützabschnitt. Der Innenzahn und der Stützabschnitt sind insbesondere konzentrisch zueinander angeordnet. Es ist besonders bevorzugt, dass dieser Innenzahn in axialer Richtung durchgehend ausgebildet ist und/oder ein konstantes Querschnittprofil aufweist. In dieser Ausgestaltung wird die erfinderische Idee nochmals unterstrichen, dass durch die Versenkung der Stützabschnitte in einen Bereich außerhalb des Kopfkreises der Axialinnenverzahnung die Innenzähne der Axialinnenverzahnung vollständig ausgebildet werden können und dadurch tragfähiger sind.

In einer bevorzugten konstruktiven Realisierung der Erfindung weist der Deckelteil einen Arretierbereich und die Schiebemuffe einen Aufnahmebereich für den Arretierbereich auf. Somit kann der Deckelteil mit dem Arretierbereich in den Aufnahmebereich eingreifen, um die Schiebemuffe zu arretieren. Der Aufnahmebereich ist in einem Mittelzahn der Axialinnenverzahnung angeordnet. Der Mittelzahn ist wie jeder andere Innenzahn der Axialinnenverzahnung ausgebildet, weist jedoch in einem mittleren Bereich eine Aussparung auf, um Platz für den Aufnahmebereich und den Arretierbereich zu schaffen. Die zwei in Umlaufrichtung unmittelbar benachbarten Innenzähne zu dem Mittelzahn, welche somit beidseitig zu dem Mittelzahn angeordnet sind, sind überlappend zu dem Winkelbereich der jeweiligen Stützabschnitte angeordnet. Mit dieser konstruktiven Ausgestaltung wird unterstrichen, dass der Aufbau so gewählt ist, dass nur so viele Innenzähne wie unbedingt nötig, nämlich ausschließlich der Mittelzahn, unterbrochen und dadurch in seiner Tragfähigkeit eingeschränkt ist.

Es ist besonders bevorzugt, dass der radiale Abstand zwischen den zu dem Stützabschnitt und dem unmittelbar benachbarten Innenzahn sehr gering gehalten ist. Insbesondere wird der Abstand kleiner als 0,3 mm, insbesondere kleiner als 0,15 mm gewählt. Durch den sehr geringen Abstand wird erreicht, dass der Innenzahn eine Abstützung für das Bodenteil gegen ein Abheben in radialer Richtung und/oder gegen ein Verkippen des Bodenteils und damit des Druckstücks bildet.

Bei einer bevorzugten Weiterbildung der Erfindung weist der Bodenteil einen Bodenbereich auf. Der Bodenbereich bildet insbesondere den radial innersten Bereich des Bodenteils und/oder des Druckstücks. Die Aussparung weist dagegen einen Grund auf, wobei der Bodenbereich von dem Grund der Aussparung in radialer Richtung zu der Hauptachse beabstandet ist. Alternativ oder ergänzend ist das Bodenteil frei hängend und/oder frei tragend zwischen den Stützabschnitten ausgebildet. Diese Ausgestaltung hat den Vorteil, dass eine Überdefinition der Position des Bodenteils und damit des Druckstücks in dem Muffenträger vermieden wird.

In einer vorteilhaften konstruktiven Ausgestaltung ist der Bodenteil in einem Querschnitt senkrecht zu der Hauptachse mit einem U-förmigen Bodenabschnitt ausgebildet, an den sich die Stützabschnitte insbesondere flügelartig anschließen. Insbesondere sind die Stützabschnitte in dem genannten Querschnitt gleichgerichtet oder parallel zu dem liegenden Schenkel des U-förmigen Bodenabschnitts.

Es ist ergänzend vorgesehen, dass der Deckelteil in dem Bodenteil in radialer Richtung zu der Hauptachse verschiebbar angeordnet ist. Durch diese Verschiebbarkeit ist es möglich, dass der Deckelteil relativ zu dem Bodenteil einfedert.

Besonders bevorzugt ist die Feder als eine Druckfeder ausgebildet, welche sich einerseits an dem Bodenteil und andererseits an dem Deckelteil abstützt. Es kann vorgesehen sein, dass der Bodenteil eine Ausformung, insbesondere eine Kuppe oder einen Zentrierdorn aufweist, auf die die Druckfeder aufgesetzt ist und durch die die Druckfeder in der Position festgelegt ist.

Die Druckfeder fährt in einen konvexen Bereich des Deckelteils ein, der als eine kalottenartige Auswölbung ausgebildet ist und den Arretierbereich des Deckelteils bilden kann, sodass die Druckfeder auch an dieser Seite in der Position festgelegt ist.

Es ist besonders bevorzugt, dass der Deckelteil als ein Blechumformteil ausgebildet ist. Neben den günstigen Herstellungskosten der Komponenten des Druckstücks wird ferner erreicht, dass das Druckstück in radialer Erstreckung sehr schmal ausgebildet werden kann. Während bei einer Kugel als Arretierelement - wie dies beispielsweise aus dem Stand der Technik bekannt ist - mindestens der Durchmesser der Kugel als radiale Erstreckung berücksichtigt werden muss, langt es bei dem Druckstück mit dem Deckelteil als Blechumformteil, dass der Deckelteil soweit konturiert ist, dass der Arretierbereich ausreichend ausgeformt ist, um in den Aufnahmebereich der Schiebemuffe eingeführt und arretiert werden zu können.

Der Deckelteil weist Flügelabschnitte auf, welche aus dem Deckelteil in axialer Richtung beidseitig auskragen. Die Flügelabschnitte können für ein beidseitiges Abstützen des Deckelteils an der Schiebemuffe dienen. Durch die Flügelabschnitte wird somit erreicht, dass das Deckelteil nicht verkippen kann.

Der Deckelteil weist vorzugsweise jeweils beidseitig einen Druckabschnitt auf, welcher so dimensioniert ist, dass dieser gegen einen Synchronring drückt, um die Synchronisierung zu initiieren. Vorzugsweise sind die Druckabschnitte als tangential zur Umlaufrichtung verlaufende Stegbereiche ausgebildet. Die Druckabschnitte können sich beispielsweise an den Flügelabschnitten anschließen.

Zwischen den Flügelabschnitten und einer zentralen, kalottenartigen Auswölbung ist eine Nut gebildet. Durch die Nut ist der Deckelteil so weit versteift, dass er die Schaltkräfte sicher auf den Synchronring übertragen kann.

### Kurze Beschreibung der Zeichnungen

Weitere Merkmale, Vorteile und Wirkungen der Erfindung ergeben sich aus der nachfolgenden Beschreibung bevorzugter Ausführungsbeispiele der Erfindung sowie der beigefügten Figuren. Dabei zeigen:
Figur 1 eine schematische dreidimensionale Darstellung einer nicht erfindungsgemäßen Synchronisiereinheit
Figur 2 die Synchronisiereinheit in der Figur 1 in einer schematischen Querschnittdarstellung;
Figur 3 eine schematische dreidimensionale Darstellung eines erfindungsgemäßen Ausführungsbeispiels einer Synchronisiereinheit;
Figur 4 die Synchronisiereinheit in der Figur 3 in einer anderen dreidimensionalen Darstellung.

### Ausführliche Beschreibung der Zeichnungen

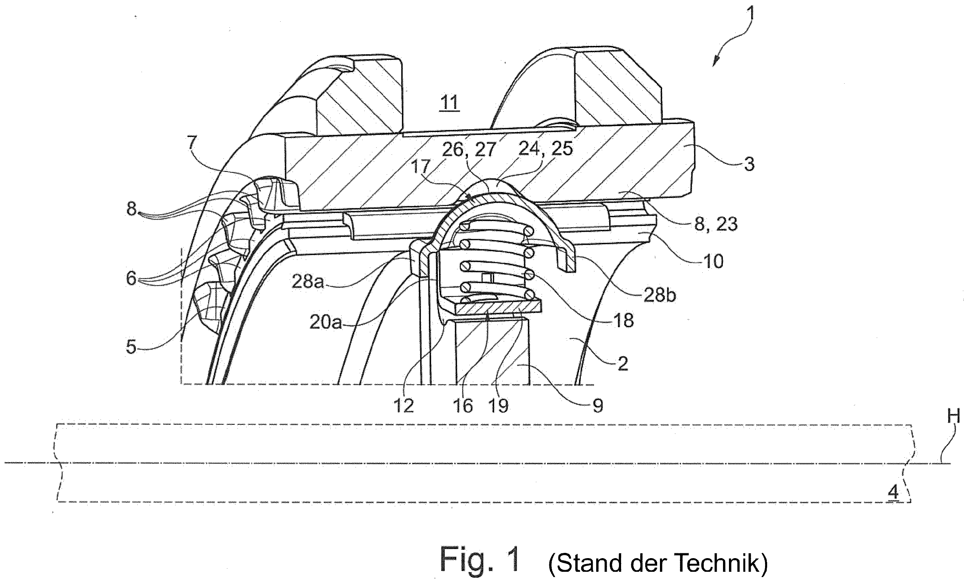

Die Figur 1 zeigt in einer schematischen dreidimensionalen Darstellung eine Synchronisiereinheit 1, welche für ein Zahnräderwechselgetriebe eines Fahrzeugs ausgebildet ist. In der Darstellung sind einige Komponenten, wie z.B. ein Synchronringpaket und ein Losrad unterdrückt.

Die Synchronisiereinheit1 weist einen Muffenträger 2 sowie eine Schiebemuffe 3 auf. Der Muffenträger 2 ist drehfest auf einer nur schematisch angedeuteten Welle 4 aufgesetzt und mit dieser dreh- und verschiebefest verbunden. Durch die Rotation des Muffenträgers 2 bzw. der Welle 4 ist eine Hauptachse H definiert. Der Muffenträger 2 weist auf seiner radial außenliegenden Umfangsfläche eine Axialaußenverzahnung 5 - auch als Muffenträgerverzahnung zu bezeichnen - auf. Die Axialaußenverzahnung 5 weist regelmäßig voneinander beabstandete Außenzähne 6 auf, deren Längserstreckung parallel zu der Hauptachse H ausgerichtet.

Die Schiebemuffe 3 weist eine dazu passende Axialinnenverzahnung 7 - auch als Schiebemuffenverzahnung zu bezeichnen - auf, welche eine Mehrzahl von Innenzähnen 8 umfasst, die ebenfalls mit ihrer Längserstreckung in axialer Richtung ausgerichtet sind. Axialaußenverzahnung 5 und Axialinnenverzahnung 7 greifen ineinander, sodass der Muffenträger 2 und die Schiebemuffe 3 drehfest, jedoch zueinander axial verschiebbar angeordnet sind.

Konstruktiv betrachtet weist der Muffenträger 2 einen Radabschnitt 9 auf, auf den radial außenseitig ein Hülsenabschnitt 10 aufgesetzt ist, welcher die Axialaußenverzahnung 5 trägt. Die axiale Breite des Radabschnitts 9 ist weniger als 1/5 der axialen Breite des Hülsenabschnitts 10. Anders ausgedrückt ist der Radabschnitt 9 in axialer Breite sehr schmal ausgeführt. Die Schiebemuffe 3 ist als ein Hohlzylinderabschnitt ausgebildet und koaxial und/oder konzentrisch zu dem Hülsenabschnitt 10 oder zu der Hauptachse H angeordnet. Radial außenseitig ist eine Nut 11 zum Eingriff eines Schaltorgans angeformt.

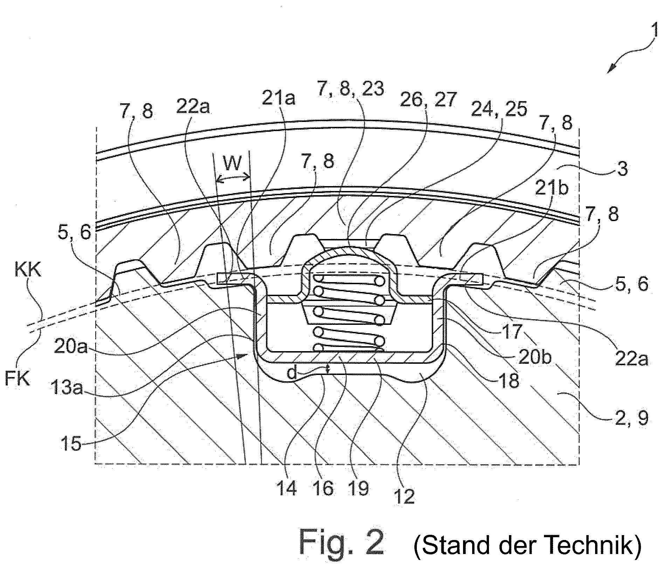

Die Figur 2 zeigt die Synchronisiereinheit 1 in einem schematischen Querschnitt senkrecht zu der Hauptachse H. Aus dieser Darstellung ist zu entnehmen, dass in dem Muffenträger 2, insbesondere in dem Radabschnitt 9 eine Aussparung 12 eingebracht ist, welche radial randseitig geöffnet ist. Die Aussparung 12 weist in dem gezeigten Querschnitt zwei im Wesentlichen parallel zueinander angeordnete Seitenwände 13a, 13b und einen im Wesentlichen senkrecht zu den Seitenwänden 13a, 13b verlaufenden Grund 14.

In der Aussparung 12 ist ein Druckstück 15 angeordnet, welches einen Bodenteil 16, einen Deckelteil 17 und eine zwischen dem Bodenteil 16 und dem Deckelteil 17 angeordnete Feder 18 aufweist. Die Feder 18 ist als eine Druckfeder ausgebildet, welche sich mit ihrem einen freien Ende an dem Bodenteil 16 und mit ihrem anderen freien Ende an dem Deckelteil 17 abstützt und diese beiden Teile auseinanderdrückt.

Der Bodenteil 16 ist in diesem Ausführungsbeispiel als ein Blechumformteil ausgebildet und insbesondere als ein mehrfach gebogener Blechstreifen realisiert. Der Bodenteil 16 weist einen U-förmigen Bodenabschnitt auf, welcher einen Bodenschenkel 19 - auch als Bodenmittelteil zu bezeichnen - und zwei Seitenschenkel 20a, 20b umfasst. An den Seitenschenkeln 20a, 20b schließen sich Stützabschnitte 21a, 21b an, welche in dem Querschnitt gleichgerichtet zu dem Bodenschenkel 19 sind.

Randseitig zu der Ausnehmung 12 anschließend an den Seitenwänden 13 a, 13b weist der Muffenträger 2 und insbesondere der Radabschnitt 9 Auflagebereiche 22 a, 22b auf, welche in dem gezeigten Querschnitt in der Figur 2 in Umlaufrichtung verlaufen und sich zudem in axialer Richtung erstrecken, sodass die Auflagebereiche 22a, 22b als Flächen ausgebildet sind.

Der Bodenteil 16 liegt mit der Unterseite der Stützabschnitte 21a, 21b auf den Auflagebereichen 22a, 22b auf. In Umlaufrichtung ist der Bodenteil 16 durch die Seitenwände 13a, 13b formschlüssig gehalten. Der Bodenschenkel 19 ist in radialer Richtung von dem Grund 14 über einen Abstand d beabstandet, sodass der Bodenteil 16 über die Stützabschnitte 21a, 21b frei hängend oder frei tragend in der Aussparung 12 angeordnet ist.

Die Auflagebereiche 22a, 22b sind gegenüber einem Fußkreis FK, der Axialaußenverzahnung 6 in radialer Richtung zu der Hauptachse H zurückversetzt. Insbesondere werden die Auflagebereiche 22a, 22b durch Bereiche gebildet, welche in radialer Richtung gegenüber den Zahnzwischenräumen zwischen den Innenzähnen 6 der Axialaußenverzahnung 5 in Richtung der Hauptachse H zurückversetzt sind.

Durch das Zurückversetzen der Auflagebereiche 22a, 22b sind auch die Stützabschnitte 21a, 21b in radialer Richtung zurückversetzt und zwar insbesondere derart, dass die Stützabschnitte 21a, 21b innerhalb eines Teilkreises angeordnet sind, welcher kleiner ist als der Kopfkreis KK der Axialinnenverzahnung der Schiebemuffe 3.

Durch das Zurückversetzen von den Stützabschnitten 21a, 21b in Richtung zu der Hauptachse H wird erreicht, dass die Stützabschnitte 21a, 21b keine Störkonturen mehr für die Innenzähne 8 der Axialinnenverzahnung 7 der Schiebemuffe 3 bilden. Dadurch können auch die Innenzähne 8, welche mit einem Winkelsegment W, welches durch die Ausdehnung in Umlaufrichtung der Stützabschnitte 21a, 21b bzw. der Auflagebereiche 22a, 22b definiert ist, überlappend angeordnet werden.

Durch die konstruktive Ausgestaltung ist sichergestellt, dass stets ein Spalt in radialer Richtung zwischen den Stützabschnitten 21 a, 21b und den Innenzähnen 8 mit einer Spaltbreite D verbleibt, sodass auch die zu den Stützabschnitten 21a, 21b benachbarten Innenzähne 8 kollisionsfrei in axialer Richtung bewegt werden können. Dies hat den Vorteil, dass die Zähne 8 in axialer Richtung durchgehend ausgebildet sein können, ohne eine Störkontur für die Stützabschnitte 21a, 21b zu bilden. Allerdings ist es genau genommen nur notwendig, dass die Stützabschnitte 21 a, 21b in dem Bereich, insbesondere in dem Winkelbereich der Innenzähne 8 innerhalb des Kopfkreises liegen müssen, da dort der engste Bereich ist. Eine Verlängerung der Stützabschnitte 21 a, 21b kann auch in die Zwischenräume zwischen die Innenzähne 8 ragen.

In einem Mittelzahn 23 der Innenzähne 8 eine Ausnehmung 24 eingebracht ist, um einen Aufnahmebereich 25 für einen Arretierbereich 26 des Deckelteils 17 zu bilden. Die dazu beidseitig jeweils benachbarten Innenzähne 8, welche konzentrisch zu den Stützabschnitten 21a, 21b angeordnet sind, sind dagegen in axialer Richtung durchgehend und/oder mit konstantem Querschnittprofil ausgebildet.

Der Deckelteil 17 liegt in der in Figur 2 gezeigten Querschnittdarstellung in Umlaufrichtung jeweils an den Seitenschenkeln 20a, 20b des Bodenteils an und kann in radialer Richtung in bzw. gegen die Federrichtung der Feder 18 verschoben werden. In einem zentralen Bereich befindet sich ein Kappenabschnitt 27, welcher als eine konvexe Auswölbung ausgebildet ist und welcher den Arretierbereich 26 trägt. Insbesondere ist der Deckelteil 17 als ein Umformteil ausgebildet.

Wie sich insbesondere aus der Figur 1 ergibt, weist der Deckelteil 17 an seinen axialen Randbereichen jeweils einen Druckabschnitt 28 a, 28b mit einer Druckfläche auf, welcher dazu dient, einen nicht dargestellten Außensynchronring des nicht dargestellten Synchronringpakets der Synchronisiereinheit 1 in axialer Richtung zu bewegen. Die Druckabschnitte 28a, 28b sind als freie Flügel des Deckelteils 17 ausgebildet.

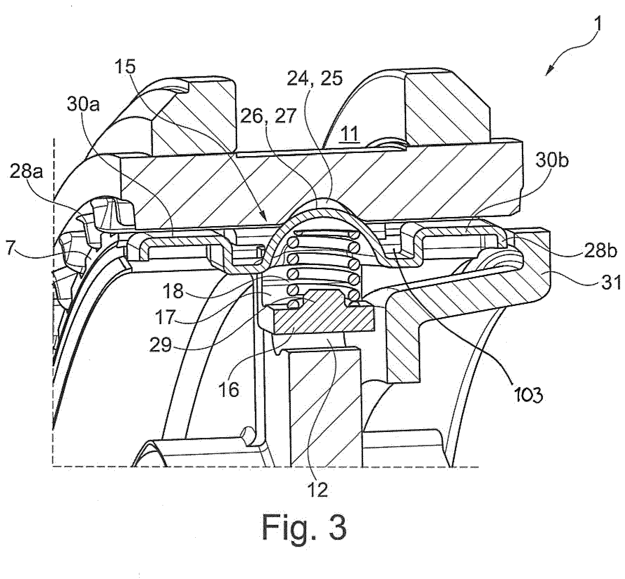

In der Figur 3 ist ein Ausführungsbeispiel der Erfindung gezeigt.

In dem Bodenteil 16 ist eine Ausformung 29 in Form eines Positionierzapfens vorgesehen, welche sich in radialer Richtung erstreckt und welche in der Feder 18 angeordnet ist, um deren Position festzulegen. Das Bodenteil 16 in bei diesem Ausführungsbeispiel als ein Kunststoffteil ausgebildet.

Im Unterschied zu dem nicht erfindungsgemäßen Beispiel nach Figur 1 erstreckt sich der Deckelteil 17 in axialer Richtung weiter und zwar insbesondere bis zum Rand der Schiebemuffe 3 erstreckt. Beidseitig sind an dem Deckelteil 17 Flügelabschnitte 30a, 30b angeformt, welche sich in radialer Richtung an der Schiebemuffe 3 abstützen und dadurch ein Verkippen des Deckelteils 17 vermeiden. Die Druckabschnitte 28a, 28b sind randseitig zu den Flügelabschnitten 30a,b angeordnet und von diesen abgewinkelt. In der Figur 3 ist auch ein Synchronring 31 gezeigt, wobei zu erkennen ist, dass der Druckabschnitt 29b den Synchronring 31 in axialer Richtung drücken kann.

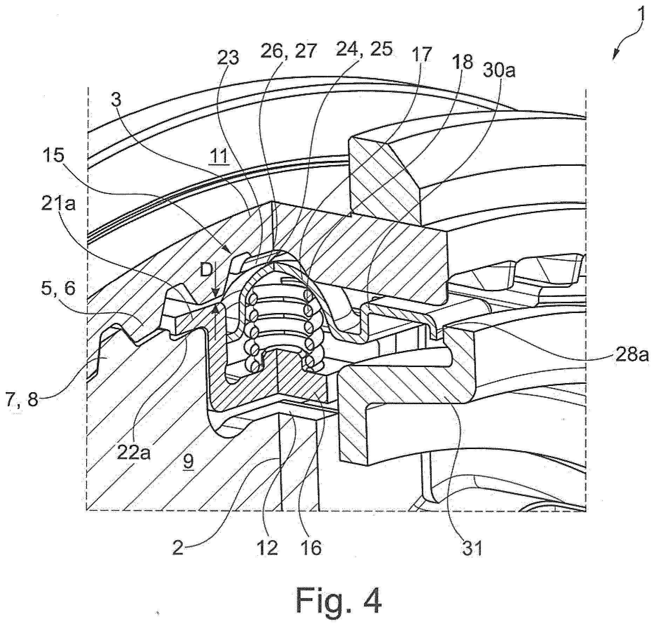

In der Figur 4 ist ähnlich wie in der Figur 2 gezeigt, dass der Stützabschnitt 21a innerhalb des Kopfkreises KK der Axialinnenverzahnung 7 der Schiebemuffe 3 liegt und der zu dem Stützabschnitt 21 a benachbarte Innenzahn 8 in axialer Richtung durchgehend ausgebildet ist, jedoch einen radialen Abstand D in radialer Richtung zu dem Stützabschnitt 21a einnimmt.

### Bezugszeichenliste

- 1: Synchronvorrichtung
- 2: Muffenträger
- 3: Schiebemuffe
- 4: Welle
- 5: Axialaußenverzahnung
- 6: Außenzähne
- 7: Axialinnenverzahnung
- 8: Innenzähne
- 9: Radabschnitt
- 10: Hülsenabschnitt
- 11: Nut
- 12: Aussparung
- 13 a, b: Seitenwände
- 14: Grund
- 15: Druckstück
- 16: Bodenteil
- 17: Deckelteil
- 18: Feder
- 19: Bodenschenkel
- 20 a,b: Seitenschenkel
- 21 a,b: Stützabschnitt
- 22 a,b: Auflagebereich
- 23: Mittelzahn
- 24: Ausnehmung
- 25: Aufnahmebereich
- 26: Arretierbereich
- 27: Kappenabschnitt
- 28 a, 28b: Druckabschnitt
- 29: Ausformung
- 30 a,b: Flügelabschnitte
- 31: Synchronring
- d: Abstand zwischen dem Bodenschenkel 19 und dem Grund 14
- FK: Fußkreis
- KK: Kopfkreis
- W: Winkelsegment
- D: Abstand zwischen dem Stützabschnitt 21 a, b und dem benachbarten Innenzahn 8
- H: Hauptachse

- 103: Nut

## Patentansprüche

1. Druckstück (15) für eine Synchronisiereinheit (1) eines Fahrzeuggetriebes mit
- einem Bodenteil (16),
- einem Deckelteil (17), der axial endseitig einen Druckabschnitt (28a, 28b) aufweist, um einen Synchronring (31) zu verschieben,
- einer Feder (18), die zwischen dem Bodenteil (16) und dem Deckelteil (17) angeordnet ist, wobei
- die Länge des Deckelteils (17) größer als die Breite des Bodenteils (16) ist,
- der Deckelteil (17) einen Flügelabschnitt (30a, 30b) aufweist,
- der Deckelteil einen kalottenförmigen Kappenabschnitt (27) aufweist, in dem sich die Feder (18) abstützt,
**dadurch gekennzeichnet, dass**
zwischen dem Flügelabschnitt (30a, 30b) und dem Kappenabschnitt (27) eine Nut (103) ausgebildet ist.

2. Druckstück nach Anspruch 1, **dadurch gekennzeichnet, dass** der Flügelabschnitt (30a, 30b) sich in Bewegungsrichtung des Druckstücks (15) erstreckt.

3. Druckstück nach einem der vorhergehenden Ansprüche, **dadurch gekennzeichnet, dass** der Bodenteil (16) einen Bodenschenkel (19) und zwei zueinander parallele Seitenschenkel (20a, 20b) aufweist.

4. Druckstück nach Anspruch 3, **dadurch gekennzeichnet, dass** die Normale zu den Seitenschenkeln (20a, 20b) senkrecht zur Haupterstreckungsrichtung des Deckelteils (17) ausgebildet ist.

5. Druckstück nach einem der Ansprüche 3 oder 4, **dadurch gekennzeichnet, dass** sich von den Seitenschenkeln (20a, 20b) Stützabschnitte (21a, 21b) abgewinkelt sind.

6. Druckstück nach einem der vorhergehenden Ansprüche, **dadurch gekennzeichnet, dass** der Bodenteil (16) oder der Deckelteil (17) aus Kunststoff ausgebildet sind.

7. Synchronisiereinrichtung (1) mit einer Schiebemuffe (3), einem Muffenträger (2), einem Synchronring (31) und einem Druckstück (15) nach einem der vorhergehenden Ansprüche, wobei der Synchronring (31) frei von in Richtung des Druckstücks (15) gerichteten Lappen ist.

## Claims

1. A pressure piece (15) for a synchronization unit (1) of a vehicle transmission, having
- a bottom part (16),
- a cover part (17), which has a pressure section (28a, 28b) at the axial end in order to displace a synchronization ring (31),
- a spring (18), which is arranged between the bottom part (16) and the cover part (17), wherein
- the length of the cover part (17) is greater than the width of the bottom part (16),
- the cover part (17) has a wing section (30a, 30b),
- the cover part has a dome-shaped cap section (27), in which the spring (18) is supported,
**characterized in that**
a groove (103) is formed between the wing section (30a, 30b) and the cap section (27).

2. The pressure piece according to claim 1, **characterized in that** the wing section (30a, 30b) extends in the direction of movement of the pressure piece (15).

3. The pressure piece according to any one of the preceding claims, **characterized in that** the bottom part (16) has a bottom leg (19) and two mutually parallel side legs (20a, 20b).

4. The pressure piece according to claim 3, **characterized in that** the normal to the side legs (20a, 20b) is designed perpendicular to the main direction of extension of the cover part (17).

5. The pressure piece according to any one of claims 3 or 4, **characterized in that** support sections (21a, 21b) are angled away from the side legs (20a, 20b).

6. The pressure piece according to any one of the preceding claims, **characterized in that** the bottom part (16) or the cover part (17) is made of plastic.

7. A synchronization device (1) having a sliding sleeve (3), a sleeve carrier (2), a synchronization ring (31) and a pressure piece (15) according to any one of the preceding claims, wherein the synchronization ring (31) is free of tabs directed in the direction of the pressure piece (15).

## Revendications

1. Élément de pression (15) pour une unité de synchronisation (1) d'une boîte de vitesses de véhicule comprenant
- une partie inférieure (16),
- une partie couvercle (17) qui présente un segment de pression (28a, 28b) à l'extrémité axiale pour déplacer une bague de synchronisation (31),
- un ressort (18) qui est disposé entre la partie inférieure (16) et la partie couvercle (17),
- la longueur de la partie couvercle (17) étant supérieure à la largeur de la partie inférieure (16),
- la partie couvercle (17) ayant un segment ailette (30a, 30b),
- la partie couvercle ayant un segment capuchon en forme de dôme (27) dans lequel est supporté le ressort (18),
**caractérisé en ce que**
une rainure (103) est formée entre le segment ailette (30a, 30b) et le segment capuchon (27).

2. Élément de pression selon la revendication 1, **caractérisé en ce que** le segment ailette (30a, 30b) s'étend dans le sens du déplacement de l'élément de pression (15).

3. Élément de pression selon l'une quelconque des revendications précédentes, **caractérisé en ce que** la partie inférieure (16) présente une branche inférieure (19) et deux branches latérales (20a, 20b) parallèles l'une à l'autre.

4. Élément de pression selon la revendication 3, **caractérisé en ce que** la normale aux branches latérales (20a, 20b) est conçue perpendiculairement à la direction principale d'extension de la partie couvercle (17).

5. Élément de pression selon l'une quelconque des revendications 3 ou 4, **caractérisé en ce que** des segments d'appui (21a, 21b) sont coudés par rapport aux branches latérales (20a, 20b).

6. Élément de pression selon l'une quelconque des revendications précédentes, **caractérisé en ce que** la partie inférieure (16) ou la partie couvercle (17) sont en matière plastique.

7. Dispositif de synchronisation (1) comportant un manchon coulissant (3), un support de manchon (2), une bague de synchronisation (31) et un élément de pression (15) selon l'une quelconque des revendications précédentes, la bague de synchronisation (31) étant dépourvue de languette orientée en direction de l'élément de pression (15).
